# EUROPEAN PATENT APPLICATION

(11) **EP 4 822 568 A1**
(43) Date of publication of application: **14.10.2026**
(21) Application number: 26170407.6
(22) Date of filing: 02.04.2026
(51) Int. Cl.: G06F 21/50, H04L 9/40

(54) **SECURITY INFORMATION AND EVENT MANAGEMENT DETECTION RULE SET OPTIMIZATION**

(30) Priority: 08.04.2025 IL 32017825
(71) Applicant: Deutsche Telekom AG, 53113 Bonn (DE)
(72) Inventor: SHUKLA, Akansha, 497001 Surguja, Chhattisgarh (IN); GANDHI, Parth, 360001 Rajkot, Gujarat (IN); MIMRAN, David, 6215505 Tel Aviv (IL); SHABTAI, Asaf, 7684200 Hulda (IL); ELOVICI, Yuval, 7986400 Arugot (IL); LEHMAN, Heiko, 12587 Berlin (DE); STRASSMANN, Martin, 45770 Marl (DE); SCHMIDT, Jan-Holger, 53123 Bonn (DE)
(74) Representative: Schmidt, Christian

(57) **Abstract**

An LLM-based method for optimizing Security Information and Event Management (SIEM)'s rule sets, comprising: using LLMs to analyze contextual components of SIEM rules in the rule sets; generating SIEM rule embeddings and using a similarity matching analysis, to identify the most similar rules in the rule sets; analyzing the most similar rules, by the LLMs, to determine rule similarity by performing semantic and syntactic comparisons of SIEM rules in the rule sets; using the comparisons for identifying and eliminating of redundant rules; and providing optimized recommendations for refining the rule set, based on the elimination of redundant rules.

## Description

### Field of the Invention

The present invention relates to the field of cybersecurity. More particularly, the present invention relates to a Large Language Model (LLM) aided recommender system and a method for optimizing Security Information and Event Management (SIEM)'s rule sets.

### Background for the Invention

Security Information and Event Management (SIEM) systems (these types of systems collect, aggregate, and analyze large volumes of data from organization-wide applications, devices, servers, and users in real time. By consolidating this vast array of data into a single, unified platform, SIEM systems provide a comprehensive view of an organization's security posture, to detect, investigate, and respond to security incidents swiftly and effectively) serve as a critical hub, employing rule-based logic to detect threats and respond to them. Redundant or overlapping rules in SIEM systems lead to excessive false alerts, degrade analyst performance due to alert fatigue, and increase computational overhead and extend response latency for actual threats. As a result, optimizing SIEM rule sets is essential for efficient operations. Current practices rely on manual optimization methods that are both time-consuming and error-prone due to the scale and complexity of enterprise-level rule sets.

Enterprises must implement robust security measures to combat increasingly sophisticated cyber threats [24]. The SolarWinds attack of 2020 [3] is as an example, in which weaknesses in a widely used IT management platform were exploited, while globally compromising the infrastructure of multiple organizations. As organizations scale, their IT infrastructure correspondingly expands, and encompass a range of components such as networking devices, cloud computing environments, and endpoints. This expansion of IT infrastructure generates a diverse and vast stream of security events.

To cope with the increasing volume of security data, enterprises depend heavily on SIEM systems [38]. SIEM systems are specifically designed to handle the challenges of processing diverse, high-volume data by aggregating events from multiple sources, each of which may use a unique vendor-specific schema. The ability of SIEM systems to standardize diverse data formats into a unified representation plays a vital role in modern enterprise security operations, and enables stream-lined event analysis, storage, and incident response [12].

The operational core of SIEM architecture is anchored in its rule-based system, where specialized rule engines bridge between raw security data and action-able intelligence [4]. This rule-based processing capability enables analysts of a Security Operations Center (SOC - is an in-house or outsourced team of IT security professionals dedicated to monitoring an organization's entire IT infrastructure, to detect, analyze and respond to security incidents in real-time) to detect and respond to threats more effectively. This improves an organization's threat detection, response and prevention capabilities by unifying and coordinating all cybersecurity technologies and operations. Therefore, the efficacy of a SIEM's detection and response capabilities depends on structured rule sets that eliminate redundancy, maximize coverage, and ensure maintainability.

The application of optimization techniques has also been widely explored in the field of networking and cybersecurity. For example, firewall rule optimization has been extensively studied to improve system efficiency while ensuring robust security. Techniques in this area have typically focused on removing redundant rules, reordering rules for better performance, and merging similar rules to streamline rule sets [21, 22, 31]. However, these methods have significant limitations when applied to the complex logic of SIEM rules. Unlike firewall rules, which are relatively straightforward, SIEM rules involve intricate event aggregation, data transformation, and multi-source data correlation logic. Consequently, the optimization approaches that work well for firewall rules are often unsuitable for SIEM environments.

Organizations continuously integrate new rules into their SIEM environment to adapt to emerging threats, accommodate new infrastructure components, and comply with regulatory requirements. While adopting an incremental approach to threat detection can enhance coverage, it also introduces significant operational challenges. As the amount of detection rules increases, overlapping logic, redundant conditions, and conflicting alerts may emerge, placing a burden on SOC analysts, who must filter through redundant alerts. This process consumes critical time and resources. The resulting alert fatigue can compromise analysts' ability to recognize genuine threats [2]. This increases the risk that serious security incidents will be undetected, thereby threatening the organization's overall security posture. Addressing these challenges requires a systematic approach to optimizing rule sets and eliminating redundancies.

By refining detection rules and continuously assessing their effectiveness, organizations can enhance their SIEM system's efficiency and bolster their defenses against emerging threats.

Currently, SIEM systems rule optimization relies mainly on manual efforts by analysts who must sift through entire rule sets to identify redundancies, merge similar rules, and remove unnecessary rules. This process, which is both time-consuming and prone to human error, requires significant expertise and experience, resulting in the inefficient allocation of human resources and an increased workload for analysts. This ultimately affects the overall efficiency of cybersecurity operations.

The extensive research performed on SQL query optimization underscores the significance of automated maintenance for optimized rule sets. While both SQL and SIEM systems fundamentally deal with pattern matching and data filtering at scale, but the SIEM's operational contexts differ significantly.

Traditional databases prioritize static, structured data, whereas SIEM systems manage real-time, heterogeneous security data streams, thereby introducing complexities that extend beyond the scope of conventional SQL optimization methods. This unique technical distinction emphasizes the need for SIEM rule optimization.

It is therefore an object of the present invention to provide a method for optimizing Security Information and Event Management (SIEM)'s rule sets, which is adapted to eliminate redundancies.

It is another object of the present invention to provide a method for optimizing Security Information and Event Management (SIEM)'s rule sets, which maximizes coverage, and ensures maintainability.

It is a further object of the present invention to provide a method for optimizing Security Information and Event Management (SIEM)'s rule sets, which improves an organization's threat detection, response and prevention capabilities.

Other objects and advantages of the invention will become apparent as the description proceeds.

### Summary of the Invention

An LLM-based method for optimizing Security Information and Event Management (SIEM)'s rule sets, comprising:
a) using LLMs to analyze contextual components of SIEM rules in the rule sets;
b) generating SIEM rule embeddings and using a similarity matching analysis, to identify the most similar rules in the rule sets;
c) analyzing the most similar rules, by the LLMs, to determine rule similarity by performing semantic and syntactic comparisons of SIEM rules in the rule sets;
d) using the comparisons for identifying and eliminating of redundant rules; and
e) providing optimized recommendations for refining the rule set, based on the elimination of redundant rules.

Semantic and syntactic comparisons of SIEM rules may be performed using embeddings being generated by code-based transformer models.

The method may further comprise the step of performing retrospective and prospective analysis of SIEM rules for potential redundancies, using a Human-In-The-Loop (HITL) system.

Potentially redundant or overlapping rules may be identified by comparing the embeddings of the potentially redundant or overlapping rules, using a distance-based similarity detection algorithm.

Each rule pair, consisting of the target rule and a potentially similar rule that may be identified through similarity matching, is analyzed using a structured Chain-of-Thought (CoT) reasoning process performed by an LLM according to the following steps:
a) evaluating functional and semantic overlap between rules;
b) assessing platform specificity and hierarchical relationships between target environments;
c) comparing the rules, based on operational metrics including coverage, false positive rate, and computational efficiency.

SIEM rule formats may include Sigma, Splunk and AQL rule definitions.

LLM-aided analysis may be performed by:
a) transforming SIEM rules are into vectorized embedding representations in a high-dimensional vector to facilitate syntactical analysis;
b) comparing the vectorized embedding representations of target rule and existing rule set using a similarity matching algorithm;
c) upon comparing a target rule to an existing rule set, generating a cluster of potentially similar rules;
d) evaluating both the target rule and the cluster of similar rules.

Consistent vector representations may be obtained by employing adaptive segmentation coupled with a conditional processing pipeline, to process SIEM rules of varying complexity, for preserving logical boundaries within each segment.

The integrity of rule vectors may be maintained under extreme load conditions using an overflow management mechanism.

Similarity detection may be performed using cosine similarity, to quantify syntactic relationships between SIEM rule embeddings.

Redundancy analysis and recommendation generation may be performed by an LLM, is being enhanced with Chain-of-Thought (CoT) reasoning.

An LLM-based platform for optimizing Security Information and Event Management (SIEM)'s rule sets, comprising a computerized device with at least one processor and associated memory, which is configured to:
a) analyze contextual components of SIEM rules in the rule sets, using LLMs;
b) generate SIEM rule embeddings and use a similarity matching analysis, to identify the most similar rules in the rule sets;
c) analyze the most similar rules, by the LLMs, to determine rule similarity by performing semantic and syntactic comparisons of SIEM rules in the rule sets;
d) identify and eliminate redundant rules; and
e) provide optimized recommendations for refining the rule set, based on the elimination of redundant rules.

### Brief Description of the Drawings

The above and other characteristics and advantages of the invention will be better understood through the following illustrative and non-limitative detailed description of preferred embodiments thereof, with reference to the appended drawings, wherein:
- Fig. 1 shows a block diagram with an overview of RuleGenie's three-phase pipeline;
- Fig. 2 shows an example of a randomly selected rule in three graphs. Sigma rule "New Service Uses Double Ampersand in Path" embedding using transformer models; and
- Fig. 3 shows a graph of the Precision-recall curve for k in Sigma rule set.

### Detailed Description of the Invention

The present invention provides a context-aware LLM-based approach for detecting similar rules and providing recommendations that reduces redundancies while maintaining high precision in evolving SIEM environments. Unlike traditional approaches that rely heavily on analyst expertise, the proposed pipeline of the present invention leverages the interpretive capabilities of LLMs to analyze the contextual components of rules. This approach enables more rapid identification and elimination of redundant rules than conventional, time-consuming methods. The method uses advanced code-based embedding techniques to enable both semantic and syntactic comparisons of SIEM rules, thereby ensuring more accurate and context-rich rule matching.

The present invention provides a Large Language Model (LLM) aided recommender method and system/platform designed to optimize SIEM rule sets. The proposed method leverages multi-head attention capabilities of transformer models (transformer models are neural networks that learn context and thus meaning by tracking relationships in sequential data and applying an evolving set of mathematical techniques, called attention or self-attention, to detect subtle ways even distant data elements in a series that influence and depend on each other), to generate SIEM rule embeddings, which are then analyzed using a similarity matching process to identify the top-k most similar rules. The LLM then processes the identified rules, by utilizing its information extraction, language understanding, and reasoning capabilities (specialized class of LLMs engineered to solve complex tasks) to analyze rule similarity, evaluate threat coverage and performance metrics, and provide optimized recommendations for refining the rule set. By automating the rule optimization process, the proposed method allows security teams to focus on more strategic tasks while enhancing the efficiency of SIEM systems and strengthening organizations' security posture. The proposed method has been evaluated on a comprehensive set of real-world SIEM rule formats, including Splunk, Sigma, and AQL (Ariel Query Language - a structured query language used in IBM QRadar (a Security Information and Event Management platform) and Juniper Secure Analytics (JSA) to extract, filter, and analyze security event and flow data stored in the Ariel database of IBM), demonstrating its platform-agnostic capabilities and adaptability across diverse security infrastructures. The experimental results show that the proposed method can effectively identify redundant rules, to decrease false positive rates and enhances the overall rule efficiency.

The proposed LLM-based platform optimize Security Information and Event Management (SIEM)'s rule sets, comprises a computerized device with at least one processor and associated memory, which is configured to analyze contextual components of SIEM rules in said rule sets, using LLMs; generate SIEM rule embeddings and use a similarity matching analysis, to identify the most similar rules in said rule sets; analyze said most similar rules, by said LLMs, to determine rule similarity by performing semantic and syntactic comparisons of SIEM rules in said rule sets; identify and eliminate redundant rules; provide optimized recommendations for refining said rule set, based on the elimination of redundant rules.

The proposed method uses a novel Human-In-The-Loop (HITL) system [30] (an Al development and operation approach where humans actively supervise, train, or intervene in automated systems to enhance accuracy, safety, and ethical decision-making) that performs both retrospective and prospective analysis of SIEM rules. The proposed system retrospectively analyzes existing rule sets for potential redundancies, while prospectively recommending optimizations when new rules are introduced, thereby continuously ensuring the rule set efficiency.

The proposed method implements a robust pipeline by using LLMs to optimize and remove duplicate SIEM rules and effectively perform rule optimization tasks. It leverages an encoder-decoder transformer model [7] (a type of neural network architecture used for sequential data processing and generation.) to generate embeddings of rules (symbolic, logical, or business rules as continuous, low-dimensional numerical vectors, allowing artificial intelligence systems to reason with, learn, and manage rules in a unified embedding space along with entities and relations), while enabling efficient syntactic representation. The proposed method employs a distance-based similarity detection algorithm [35] to identify potentially redundant or overlapping rules in relation to a target rule in a rule set. The target rule may represent a newly proposed rule or an existing rule from the rule set being analyzed.

Each rule pair, consisting of the target rule and a potentially similar rule that is identified through similarity matching is then analyzed using a structured Chain-of-Thought (CoT) [44] reasoning process (Chain of thought is a prompt engineering technique that enhances the output of LLMs, particularly for complex tasks involving multistep reasoning) performed by an LLM. This CoT analysis is performed in three key steps. First, the LLM evaluates functional and semantic overlap between the rules. Second, the LLM assesses platform specificity and hierarchical relationships between target environments. Finally, the LLM compares the rules based on operational metrics including coverage, the false positive rate, and computational efficiency. By integrating these aspects of analysis, the proposed method produces data-driven recommendations for rule set optimization, thereby ensuring that no blind spots emerge in an organization's threat detection capabilities while maintaining SIEM systems' operational efficiency.

The proposed method was assessed across diverse SIEM rule formats, including Sigma [5], Splunk [39], and AQL (Ariel query language) rule definitions. The evaluation encompassed 2,347 Sigma rules and 1,640 Splunk security content rules, with respectively 139 and 58 redundant rules demonstrating overlapping functionalities expressed via identical query structures or detection objectives.

To validate the platform-agnostic nature of the proposed approach, the 2,347 Sigma rules were converted into AQL security rules used by QRadar and the proposed method's ability to identify redundant rule pairs across multiple SIEM environments has been examined. In addition, the proposed method has been evaluated using two LLMs: a proprietary model (GPT-4o) and a local open source model. The GPT-4o model achieved over 90% recall and 65% precision across all SIEM rule formats. The local open-source model achieved over 80% recall and 75% precision across all SIEM rule formats, while also ensuring data privacy and reduced costs.

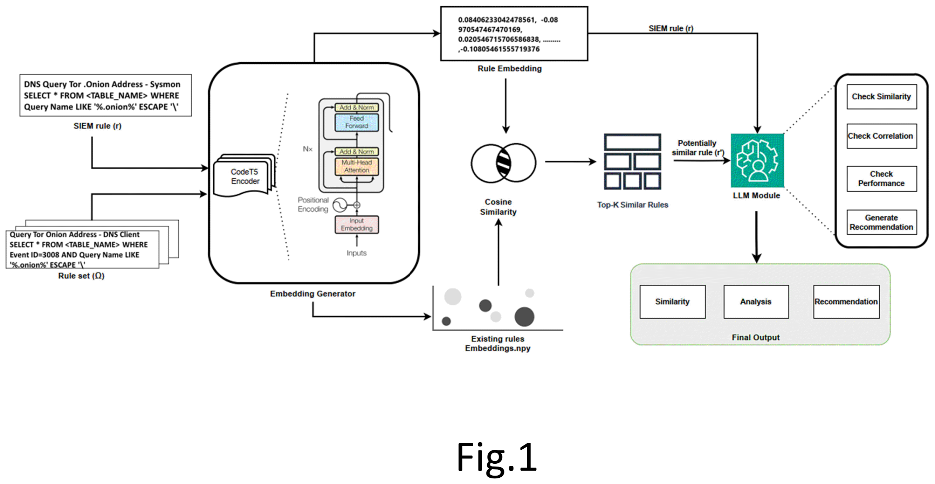

The proposed method pipeline comprises three phases: rule embedding generation, similarity detection, and LLM analysis, as illustrated in Fig. 1. In the first phase, SIEM rules are transformed into embedding representations in a high-dimensional vector to facilitate syntactical analysis. In the second phase, the vectorized embedding representations of target rule and existing rule set is compared using a similarity matching algorithm. Once a target rule has been compared to an existing rule set, a cluster of potentially similar rules is generated. In the final phase, LLM-aided analysis is performed to evaluate both the target rule and the cluster of similar rules. The proposed method pipeline exploits transformer models for SIEM rule vectorization (the process of converting an algorithm from operating on a single value at a time to operating on a set of values at one time) and uses LLMs for semantic analysis.

In the initial phase, the proposed method utilizes a transformer-based architecture to generate rule embeddings. This embedding process forms the cornerstone of the pipeline, thereby ensuring that downstream tasks benefit from comprehensive and context-rich representations of SIEM rules and enhancing the overall pipeline's effectiveness.

At the first step, a comparative analysis of transformer models is conducted, to identify the most suitable architecture for encoding SIEM rule syntax. The evaluation included general-purpose language models (BERT [9], RoBERTa [23]), security-specific model (SecBERT [17]), and code-oriented models (CodeBERT [8], CodeT5 [43]).

The vector distance analysis between redundant Sigma rules demonstrated that code-based models achieve superior performance in maintaining vector proximity for syntactically similar rules. CodeT5 emerged as the optimal choice for the pipeline, based on several key attributes:
(1) **Architecture design:** The pre-trained encoder-decoder transformer architecture, derived from T5, excels at both comprehension and generation tasks.
(2) **Token processing:** The identifier-aware training objective enables precise token distinction and recovery.
(3) **Dual-modality training:** The training on both code and natural language facilitates effective alignment between natural and programming language constructs.

The embedding framework of the present invention employs an adaptive segmentation strategy coupled with a conditional processing pipeline, to accommodate SIEM rules of varying complexity while ensuring consistent vector representations. The architecture implements two processing mechanisms based on input dimensionality:
- *Standard processing mechanism.* The proposed method's pipeline uses an advanced segmentation approach to handle SIEM rules that exceed standard token length limits (512-4096 tokens).

The system employs a chunking mechanism that is designed to preserve logical boundaries within each segment. After segmentation, each partition is processed independently through the encoder, which captures the salient features of the input. These encoded segments are then recombined to preserves the relationships between chunks and maintains the overall context of the rule.

### Overflow management mechanism:

To maintain models' robustness when processing exceptionally complex SIEM rules (exceeding 4096 tokens), a graceful degradation protocol [16] that initiates a controlled fallback to a near null-space representation has been employed, to generate a standardized 256-dimensional zero vector. In critical security contexts, these instances are flagged for optional manual review. This overflow management mechanism ensures that system integrity is upheld even under extreme load conditions.

This dual-architecture for embedding generation ensures consistent processing capabilities across SIEM rules of varying complexity, while preserving the dimensional structure of the vector space representation. The system design prioritizes both processing efficiency and representation uniformity, making it well-suited for security operations.

Similarity Detection has been performed using cosine similarity [19] (that measures the similarity between two non-zero vectors by calculating the cosine of the angle between them, focusing on orientation rather than magnitude), to quantify the syntactic relationships between SIEM rule embeddings. Cosine similarity was chosen as the metric, because it is agnostic to vector magnitude, making it particularly robust for comparing embeddings of varying complexities. The similarity measure was done by implement a top-k retrieval mechanism (k = 5 has been set in these evaluations) for each SIEM rule.

Additionally, transformer selection reveals that the embedding space exhibits interesting topological properties, where syntactical related rules form well-defined clusters.

In the last phase of the proposed framework, redundancy analysis is performed by an LLM that is enhanced with Chain-of-Thought (CoT) reasoning (is a technique that improves the performance of language models by explicitly prompting the model to generate a step-by-step explanation or reasoning process before arriving at a final answer), to perform fine-grained semantic and functional analysis of security rules. Initially, GPT-4o [18] has been used, which demonstrated exceptional performance in understanding complex security rule semantics and generating nuanced recommendations.

Open-source models have been evaluated, as well, while focusing on three criteria: (1) context length capacity for handling extensive rule descriptions; (2) analytical capabilities for semantic analysis; and (3) computational efficiency and resource optimization. Qwen-2.5-14B-Instruct LLM has been selected as the primary LLM. This LLM demonstrated superior performance in specific security rule analysis tasks, thereby offering an optimal balance between computational efficiency and analytical capability.

To maximize the effectiveness of the Qwen-2.5-14B-Instruct LLM, prompting strategies that leverage its context understanding capabilities have been developed. A standardized JavaScript Object Notation (JSON) response format (a lightweight, text-based, language-independent data interchange format commonly used for API responses) has been developed, which structures the model's outputs across all analytical stages while maintaining computational efficiency. This structured approach ensures consistent, machine-readable outputs while preserving the sophisticated analytical capabilities required for security rule optimization.

The LLM-driven redundancy analysis consists of the following four stages.

### Stage 1: Deep semantic analysis and functional mapping

The process begins with the LLM evaluating a pair of rules (*r, r '*), where r represents the current rule and r ' represents a candidate from the k-nearest neighbors identified using the similarity matching algorithm. The LLM performs semantic analysis, while considering both syntactic structure and functional intent. The rules are compared by the LLM for structural matching, semantic equivalence and conditional overlap necessary to establish whether r and *r* ' exhibit a significant degree of similarity, as detailed in Algorithm 1.

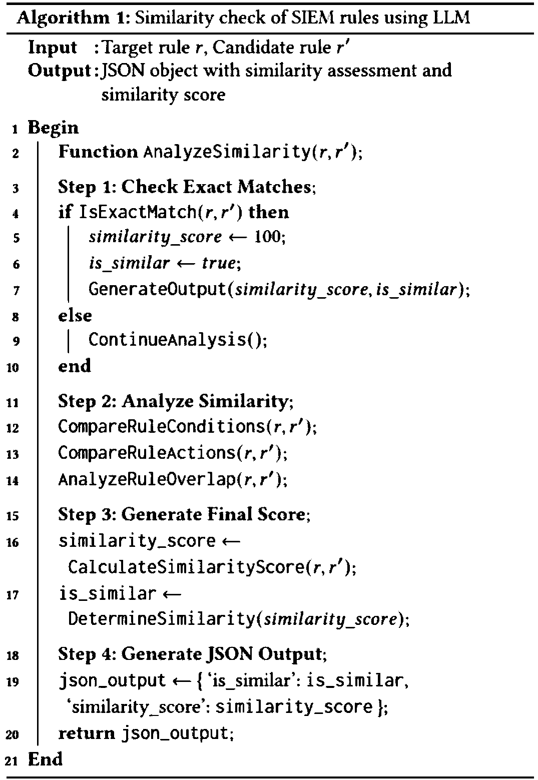

This analysis yields two key outputs:
- A Boolean classification indicating semantic and functional overlap.
- A similarity score *s* ∈ [0, 100], where 0 indicates no similarity and 100 indicates perfect similarity.

Through cross-platform evaluation, a minimum similarity threshold of 75 was established, which effectively identifies significant rule overlaps while minimizing false positives. Rules with s ≥ 75 proceed to subsequent analysis stages, while others are pruned to maintain computational efficiency and ensure meaningful comparisons. This threshold was validated across multiple SIEM platforms and diverse rule sets.

### Stage 2: Hierarchical dependence recognition

For qualifying rule pairs, a novel hierarchical relationship detection algorithm that examines both structural and semantic dependencies has been employed. The analysis focuses on identifying three primary relationship patterns:
(1) **Platform-specific independence,** where rules serve similar security objectives but operate within distinct technological contexts.
(2) **Generalization relationships,** where one rule subsumes or extends another functionality.
(3) **Cross-platform dependencies,** which reveal potential optimization opportunities across different security platforms.

This hierarchical mapping enables sophisticated rule organization strategies and forms the foundation for optimization decisions.

### Stage 3: Performance and quality optimization

In this stage a comprehensive evaluation framework for dependent rule pairs is implemented to analyze their operational effectiveness. Comparative evaluation is conducted across three performance metrics:
(1) **Coverage Analysis:** The scope and comprehensiveness of each rule's detection capabilities are assessed. Broader coverage is prioritized.
(2) **Efficiency Metrics:** Execution times and resource consumption are evaluated to minimize operational overhead.
(3) **False Positive Mitigation:** As outlined in Algorithm 2 below, the potential for false positive generation is rigorously assessed based on three key aspects: conditional statement scope, filtering criteria, and validation logic implementation. Each rule is further analyzed for its effectiveness in minimizing blind spots and ensuring robust validation logic. After evaluating both the target rule r and candidate rule r ' against these criteria, the results are compared to identify the superior rule, with a preference for rules that maintain high accuracy while reducing noise.

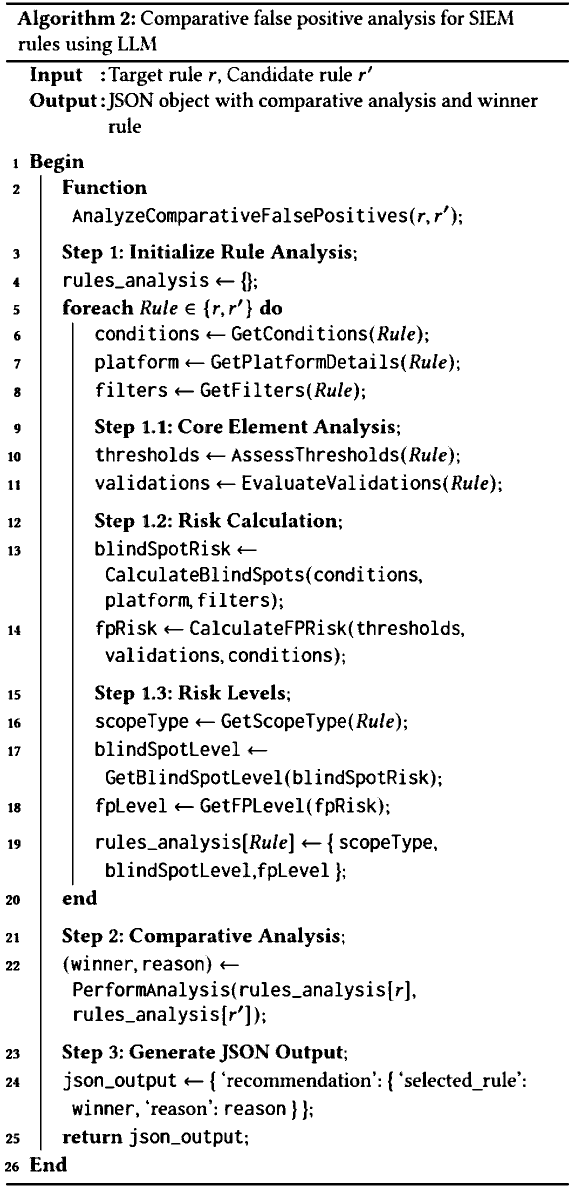

Stage 4: Rule recommendation for SIEM environments

In the final stage recommendations are generated by integrating insights from all analytical stages, while carefully balancing trade-offs between conflicting metrics such as efficiency and accuracy. This process results in finely tuned recommendations and a high-confidence rule deployment strategy designed to be robust, adaptable, and contextually aligned with operational requirements.

By combining semantic analysis, hierarchical dependency mapping, and performance evaluation, this LLM-driven phase provides systematic and targeted strategies for optimizing SIEM rules. Its structured framework enables precise reasoning that improves rule relevance and operational effectiveness, addressing the challenges of modern cybersecurity environments. This ensures that recommendations are not only balanced and actionable but also tailored to the dynamic demands of security operations, fostering advanced threat detection and mitigation.

### Experimental Setup

The proposed method has been implemented using Python 3.11. The pipeline extracts features from SIEM rule files to generate embeddings, using the encoder component of Salesforce's CodeT5 model, accessed through Hugging Face's AutoModel and AutoTokenizer interfaces. In the initial experiments, OpenAl's GPT-4o API has been employed for rule similarity comparison, performance analysis, and recommendation generation. To address scalability concerns regarding cost and data privacy, the pipeline has been migrated to open-source Qwen-2.5-14B-Instruct model, implemented via Hugging Face's AutoModelForCausalLM framework. Open-source model Qwen-2.5-14B-Instruct can efficiently run on a single NVIDIA 6000 GPU and 32 GB of RAM.1

To address security considerations surrounding sensitive SIEM infrastructure, the experimental analysis has been limited to detection rules sourced from public security repositories. The data acquisition framework leveraged two prominent open-source security initiatives: the Sigma detection framework [5] and Splunk Security Content repository [39]. The integration of these complementary sources yielded 3,987 detection rules, which has been pre-classified into three distinct categories: (1) foundational detection rules for baseline security monitoring, (2) advance threat hunting rules, and (3) emerging threat rules targeted at time-critical vulnerabilities and exploits.

For the initial evaluation of the proposed method pipeline Splunk (used to filter, route, and mask data before indexing, or to identify malicious activity and security threats) and Sigma rules (an open-source standard for defining detection logic, allowing cybersecurity teams to detect malicious activity in logs and share these rules across different SIEM platforms) were used. Through rigorous analysis of 2,347 Sigma rules, 130 Windows-specific rules were identified as new, and the other 2,217 were incorporated in the existing rule set. The Splunk Security Content repository contributed an additional 100 new rules, complemented by 1,540 existing rules. To validate the platform-agnostic nature of the proposed method, all 2,347 Sigma rules were converted into AQL queries. pySigma [1], a Python package maintained by the Sigma repository authors, has been utilized to convert the Sigma rules into both AQL and Splunk query formats. This comprehensive classification and conversion process facilitated the development of a robust input dataset analysis and experimentation.

Table 1 categorizes SIEM rules into redundant and non-redundant groups across Sigma, Splunk, and AQL datasets, covering both newly introduced and existing rules.

**Table 1: Comparison of SIEM rule sets in terms of redundancy and new rules.**

| **SIEM Rule Set** | **Non-Redundant Existing Rules** | **Non-Redundant New Rules** | **Redundant Existing Rules** | **Redundant New Rules** |
|---|---|---|---|---|
| **Sigma** | **2167** | **41** | **50** | **89** |
| **Splunk** | **1517** | **65** | **23** | **35** |
| **AQL** | **2167** | **41** | **50** | **89** |

Empirical evaluation has been used to select the transformer model and the k value for the similarity matching algorithm. As no established method exists for SIEM rule set optimization, the proposed method has been evaluated using the commonly utilized metrics of average recall and precision for selection of k value and LLM model. These metrics are particularly well-suited for tasks where relevance depends on context, as is often the case in recommender systems.

### Embedding Model Selection

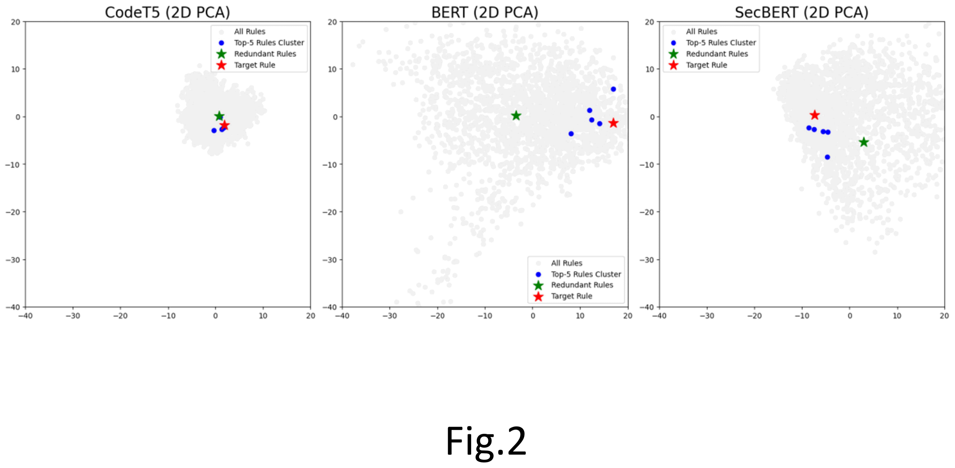

Fig. 2 illustrates the results in demonstrating distinct performance in identifying redundant SIEM rules across the general-purpose model BERT, the security specific model SecBERT, and the code-specific model CodeT5 .To visualize the high-dimensional embeddings of SIEM rules for comparison of different transformer models, principal component analysis (PCA) has been employed for dimensionality reduction to a 2-D representation. The visualization scheme has a target rule under evaluation marked in red, while the rule that is redundant to target rule is represented in green. The code-specific model exhibits better performance in proximity measurements for actual redundant rules, suggesting a more nuanced understanding of rule syntax.

The selection of CodeT5 over CodeBERT as the encoder architecture was motivated by three key factors: (1) its larger parameter space, which allows for more complex feature representations; (2) its specialized pre-training on programming language keywords, which is particularly relevant for SIEM rule syntax; and (3) its comprehensive fine-tuning approach across diverse code-related tasks.

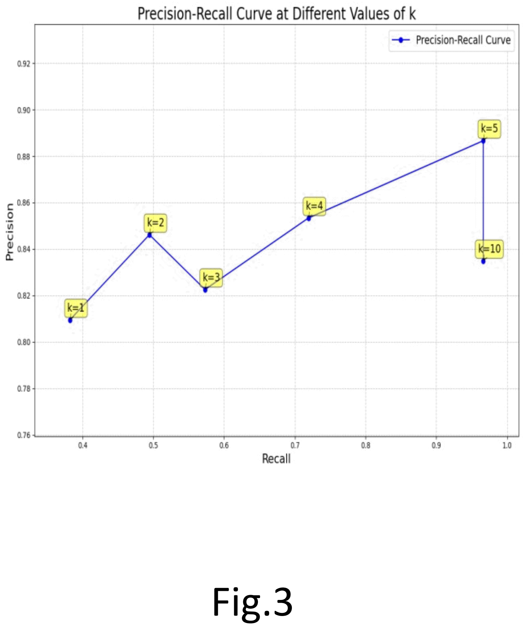

The optimal value of k was empirically determined through analysis of precision-recall trade-offs across different k values for the Sigma rule set, as shown in Fig. 3. The results demonstrate that the recall metric values consistently improved as k increases from one to five, with recall values showing substantial improvement from 0.382 to 0.966, representing a 152.94% increase. Similarly, precision showed a generally positive trend up to *k* =5, starting at 0.810 for *k* =1 and reaching its peak of 0.887 at *k* =5, representing a 9.5% improvement. This simultaneous enhancement in both precision and recall metrics up to k =5indicates strong classifier performance.

While the recall metric values plateau at 0.966 for *k* ≥ 5, precision begins to deteriorate for *k* > 5, dropping to 0.843 at *k =* 10. This represents a 4.9% decrease in precision with no corresponding gain in recall, suggesting that k =5 represents an optimal balance point.

The deterioration in precision beyond k =5can be attributed to the inclusion of more distant neighbors in the classification decision, which may introduce noise and reduce the classifier's ability to maintain clear decision boundaries.

### LLM model selection

The analysis shown in Fig. 2 shows that SIEM rules exhibit strong locality in the embedding space, with rules sharing similar syntactic structures clustering together, suggesting that the embeddings effectively capture structural patterns in the rule syntax. Although embedding-based similarity matching facilitates rule comparison, it lacks critical understanding of rule semantics and SIEM-specific contexts. Decisions based solely on syntactic similarity risk generate false positive recommendations and, more critically, could create security blind spots by suggesting the removal of rules that serve unique defensive purposes in their environments.

To address these limitations using LLMs that have been trained on both natural language and cybersecurity domain knowledge during their training phase, provides a more nuanced understanding of SIEM rule semantics, considering both the technical implementation details and the security implications of rule modifications. This approach significantly improves the quality of rule recommendations while maintaining the comprehensive coverage necessary for robust security monitoring.

A comprehensive evaluation of GPT-4o's performance has been performed in analyzing SIEM rule sets. The analysis showed that while GPT-4o demonstrated high accuracy in identifying redundant rules and providing contextually relevant recommendations, the operational costs proved to be a significant constraint. Specifically, processing the complete rule set incurred a cost of $142.5 per iteration, with an average processing time of 70 minutes. The cost analysis was based on the standard GPT-4o API pricing of $0.03 per 1K input tokens and $0.06 per 1K output tokens.

Initial experimentation with Llama 3.1 8B as a lightweight open-source alternative revealed significant limitations in SIEM rule analysis. The base model exhibited an unacceptably high hallucination rate of 70% during rule syntax interpretation and operational context understanding. Subsequent fine-tuning on domain-specific SIEM rules and operational parameters yielded statistically insignificant improvements in model performance. The model's linear time complexity *O* (*n*) (the running time of an algorithm increases in direct, linear proportion to the size of its input data) proved computationally inefficient for enterprise scale deployments, particularly when processing large rule sets. This computational constraint, coupled with persistent hallucination issues, rendered the model unsuitable for production environments requiring reliable rule analysis.

Evaluation of Qwen-2.5-14B-Instruct showed that its performance metric values were comparable to those of GPT-4o while addressing the critical constraints of data privacy and operational costs. The model achieved a minimum precision of 72% and recall of 88% in SIEM rule recommendation. These performance metric values, combined with the advantages of on-premises deployment and cost-effectiveness, establish Qwen-2.5-14B-Instruct as a viable solution for enterprise SIEM infrastructure implementations.

The key metrics of precision and recall for performance evaluation of the proposed method are calculated on the basis of the relevance of recommendation provided. To assess the relevance of rule recommendations based on three critical matrices: (a) detection coverage; (b) false positive rate reduction; and (c) computational efficiency.

Extensive comparative analyses have been conducted between open-source and proprietary LLMs across heterogeneous SIEM rule collections. Rule transformation accuracy and semantic preservation across different SIEM platforms were evaluated, to examine the applicability and generalization capabilities of the proposed approach.

### Adding new rules to an existing rule set

The experimental evaluation, the results of which are summarized in Table 2, examines the performance of various LLMs in generating security rule recommendations for newly implemented SIEM rules.

**Table 2: Adding new rules to an existing rule set. Comparison of models on different rule sets in terms of precision and recall. Bold numbers indicate best performance and underlined numbers indicate second-best performance.**

| **Model** | **SIEM Rule Set** | **Precision** | **Recall** |
|---|---|---|---|
| GPT-4o | Sigma | 0.886 | **0.966** |
| | Splunk | 0.673 | **1.000** |
| | AQL | 0.886 | **0.966** |
| Qwen-2.5-14B-Instruct | Sigma | **0.941** | 0.910 |
| | Splunk | **0.795** | 0.886 |
| | AQL | **0.941** | 0.910 |
| Llama 3.1 8B-Instruct Fine-tuned | Sigma | 0.450 | 0.483 |
| | Splunk | 0.315 | 0.398 |
| | AQL | 0.450 | 0.483 |

The results show that Qwen-2.5-14B-Instruct outperforms GPT-4 in terms of precision across all evaluated rule sets, with comparable recall performance between the two models.

Existing rule set has been optimized, based on the cost analysis, which revealed significant operational expenses associated with GPT-4o, and the high hallucination rates observed in Llama 3.1 8B, Qwen-2.5-14B-Instruct has been selected to optimize the existing SIEM rule set. The results of the evaluation of Qwen-2.5-14B-Instruct's performance in rule set optimization are presented in Table 3 and demonstrate its effectiveness as a cost-efficient and reliable alternative.

**Table 3: Optimizing existing rule set. Performance of Qwen-2.5-14B-Instruct on different rule sets.**

| **Model** | **SIEM Rule Set** | **Precision** | **Recall** |
|---|---|---|---|
| Qwen-2.5-14B-Instruct | Sigma | 0.947 | 0.850 |
| | Splunk | 0.726 | 0.804 |
| | AQL | 0.947 | 0.850 |

As various embodiments and examples have been described and illustrated, it should be understood that variations will be apparent to one skilled in the art without departing from the principles herein. Accordingly, the invention is not to be limited to the specific embodiments described and illustrated in the drawings.

### References

**[1]** [n.d.]. pySigma Documentation — pySigma documentation - sigmahq-pysigma.readthedocs.io. https://sigmahq-pysigma.readthedocs.io/. [Accessed 07-01-2025].
**[2]** Bushra A Alahmadi, Louise Axon, and Ivan Martinovic. 2022. 99% false positives: A qualitative study of {SOC} analysts' perspectives on security alarms. In 31st USENIX Security Symposium (USENIX Security 22). 2783-2800.
**[3]** Rahaf Alkhadra, Joud Abuzaid, Mariam AlShammari, and Nazeeruddin Mohammad. 2021. Solar Winds Hack: In-Depth Analysis and Countermeasures. In 2021 12th International Conference on Computing Communication and Networking Technologies (ICCCNT). 1-7. https://doi.org/10.1109/ICCCNT51525.2021.9579611
**[4]** Sandeep Bhatt, Pratyusa K Manadhata, and Loai Zomlot. 2014. The operational role of security information and event management systems. IEEE security & Privacy 12, 5 (2014), 35-41.
**[5]** Sigma contributors. 2023. Sigma - Generic Signature Format for SIEM Systems. https://github.com/SigmaHQ/sigma/. Accessed: 2023-01-06.
**[6]** Anshuman Dutt, Chi Wang, Azade Nazi, Srikanth Kandula, Vivek Narasayya, and Surajit Chaudhuri. 2019. Selectivity estimation for range predicates using lightweight models. Proceedings of the VLDB Endowment 12, 9 (2019), 1044-1057.
**[7]** Elozino Egonmwan and Yllias Chali. 2019. Transformer-based Model for Single Documents Neural Summarization. In Proceedings of the 3rd Workshop on Neural Generation and Translation, Alexandra Birch, Andrew Finch, Hiroaki Hayashi, loannis Konstas, Thang Luong, Graham Neubig, Yusuke Oda, and Katsuhito Sudoh (Eds.). Association for Computational Linguistics, Hong Kong, 70-79. https://doi.org/10.18653/v1/D19-5607
**[8]** Zhangyin Feng, Daya Guo, Duyu Tang, Nan Duan, Xiaocheng Feng, Ming Gong, Linjun Shou, Bing Qin, Ting Liu, Daxin Jiang, et al. 2020. Codebert: A pre-trained model for programming and natural languages. arXiv preprint arXiv:2002.08155 (2020).
**[9]** Prakhar Ganesh, Yao Chen, Xin Lou, Mohammad Ali Khan, Yin Yang, Hassan Sajjad, Preslav Nakov, Deming Chen, and Marianne Winslett. 2021. Compressing large-scale transformer-based models: A case study on bert. Transactions of the Association for Computational Linguistics 9 (2021), 1061-1080.
**[10]** Ethan Garza, Erik Hemberg, Stephen Moskal, and Una-May O'Reilly. 2023. Assessing Large Language Model's knowledge of threat behavior in MITRE ATT&CK. KDD.
**[11]** Peter Gassner, Guy M. Lohman, K Bernhard Schiefer, and Yun Wang. 1993. Query optimization in the IBM DB2 family. IEEE Data Eng. Bull. 16, 4 (1993), 4-18.
**[12]** Gustavo González-Granadillo, Susana González-Zarzosa, and Rodrigo Diaz. 2021. Security information and event management (SIEM): analysis, trends, and usage in critical infrastructures. Sensors 21, 14 (2021), 4759.
**[13]** Goetz Graefe. 1995. The cascades framework for query optimization. IEEE Data Eng. Bull. 18, 3 (1995), 19-29.
**[14]** Goetz Graefe and David J DeWitt. 1987. The EXODUS optimizer generator. In Proceedings of the 1987 ACM SIGMOD international conference on Management of data. 160-172.
**[15]** Shohedul Hasan, Saravanan Thirumuruganathan, Jees Augustine, Nick Koudas, and Gautam Das. 2020. Deep learning models for selectivity estimation of multi-attribute queries. In Proceedings of the 2020 ACM SIGMOD International Conference on Management of Data. 1035-1050.
**[16]** Maurice P Herlihy and Jeannette M Wing. 1991. Specifying graceful degradation. IEEE Transactions on Parallel and Distributed Systems 2, 1 (1991), 93-104.
**[17]** Hai Huang and Yongjian Wang. 2024. SecBERT: Privacy-preserving pre-training based neural network inference system. Neural Networks 172 (2024), 106135.
**[18]** Raisa Islam and Owana Marzia Moushi. 2024. Gpt-4o: The cutting-edge advancement in multimodal Ilm. Authorea Preprints (2024).
**[19]** Baoli Li and Liping Han. 2013. Distance weighted cosine similarity measure fortext classification. In Intelligent Data Engineering and Automated Learning-IDEAL 2013: 14th International Conference, IDEAL 2013, Hefei, China, October 20-23, 2013. Proceedings 14. Springer, 611-618.
**[20]** Guoliang Li, Xuanhe Zhou, Ji Sun, Xiang Yu, Yue Han, Lianyuan Jin, Wenbo Li, Tianqing Wang, and Shifu Li. 2021. opengauss: An autonomous database system. Proceedings of the VLDB Endowment 14, 12 (2021), 3028-3042.
**[21]** Alex X Liu and Mohamed G Gouda. 2008. Complete redundancy removal for packet classifiers in TCAMs. IEEE Transactions on Parallel and Distributed Systems 21, 4 (2008), 424-437.
**[22]** Alex X Liu, Chad R Meiners, and Yun Zhou. 2008. All-match based complete redundancy removal for packet classifiers in TCAMs. In IEEE INFOCOM 2008-The 27th Conference on Computer Communications. IEEE, 111-115.
**[23]** Yinhan Liu, Myle Ott, Naman Goyal, Jingfei Du, Mandar Joshi, Danqi Chen, Omer Levy, Mike Lewis, Luke Zettlemoyer, and Veselin Stoyanov. 2019. RoBERTa: A Robustly Optimized BERT Pretraining Approach. arXiv:1907.11692 [cs.CL] https://arxiv.org/abs/1907.11692
**[24]** Hiscox Ltd. 2024. Cyber Readiness Report 2024. Technical Report. Hiscox Ltd. https://www.hiscoxgroup.com/sites/group/files/documents/2024-10/HSX245%20%E2%80%93%20%202024%20CRR.pdf
**[25]** Lothar F Mackert and Guy M Lohman. 1986. R* optimizer validation and performance evaluation for local queries. In Proceedings of the 1986 ACM SIGMOD international conference on Management of data. 84-95.
**[26]** Ryan Marcus, Parimarjan Negi, Hongzi Mao, Chi Zhang, Mohammad Alizadeh, Tim Kraska, Olga Papaemmanouil, and Nesime Tatbul. 2019. Neo: A learned query optimizer. arXiv preprint arXiv:1904.03711 (2019).
**[27]** Ryan Marcus and Olga Papaemmanouil. 2018. Deep reinforcement learning for join order enumeration. In Proceedings of the First International Workshop on Exploiting Artificial Intelligence Techniques for Data Management. 1-4.
**[28]** William J McKenna. [n. d.]. The Volcano Optimizer Generator: Extensibility and Efficient Search. ([n. d.]).
**[29]** M Muralikrishna and David J DeWitt. 1988. Equi-depth multidimensional histograms. In Proceedings of the 1988 ACM SIGMOD international conference on Management of data. 28-36.
**[30]** David Sousa Nunes, Pei Zhang, and Jorge Sá Silva. 2015. A survey on human-in-the-loop applications towards an internet of all. IEEE Communications Surveys & Tutorials 17, 2 (2015), 944-965.
**[31]** Fredrik Persson. 2020. Optimization of rulesets with reinforcement learning.
**[32]** Hamid Pirahesh, Joseph M Hellerstein, and Waqar Hasan. 1992. Extensible/rule based query rewrite optimization in Starburst. ACM Sigmod Record 21, 2 (1992), 39-48.
**[33]** Viswanath Poosala, Peter J Haas, Yannis E loannidis, and Eugene J Shekita. 1996. Improved histograms for selectivity estimation of range predicates. ACM Sigmod Record 25, 2 (1996), 294-305.
**[34]** Viswanath Poosala and Yannis E loannidis. 1997. Selectivity estimation without the attribute value independence assumption. In VLDB, Vol. 97. 486-495.
**[35]** Gang Qian, Shamik Sural, Yuelong Gu, and Sakti Pramanik. 2004. Similarity between Euclidean and cosine angle distance for nearest neighbor queries. In Proceedings of the 2004 ACM symposium on Applied computing. 1232-1237.
**[36]** Dipayan Saha, Shams Tarek, Katayoon Yahyaei, Sujan Kumar Saha, Jingbo Zhou, Mark Tehranipoor, and Farimah Farahmandi. 2024. Llm for soc security: A paradigm shift. IEEE Access (2024).
**[37]** P Griffiths Selinger, Morton M Astrahan, Donald D Chamberlin, Raymond A Lorie, and Thomas G Price. 1979. Access path selection in a relational database management system. In Proceedings of the 1979 ACM SIGMOD international conference on Management of data. 23-34.
**[38]** Muhammad Sheeraz, Muhammad Arsalan Paracha, Mansoor UI Haque, Muham-mad Hanif Durad, Syed Muhammad Mohsin, Shahab S Band, and Amir Mosavi. 2023. Effective security monitoring using efficient SIEM architecture. Hum.-Centric Comput. Inf. Sci 13 (2023), 1-18.
**[39]** Splunk. n.d.. Splunk Security Content Homepage. https://github.com/splunk/security/content
**[40]** Ji Sun, Guoliang Li, and Nan Tang. 2021. Learned cardinality estimation for similarity queries. In Proceedings of the 2021 International Conference on Management of Data. 1745-1757.
**[41]** Immanuel Trummer, Junxiong Wang, Ziyun Wei, Deepak Maram, Samuel Moseley, Saehan Jo, Joseph Antonakakis, and Ankush Rayabhari. 2021. Skinnerdb: Regret-bounded query evaluation via reinforcement learning. ACM Transactions on Database Systems (TODS) 46, 3 (2021), 1-45.
**[42]** Raja Vavekanand and Kira Sam. 2024. Llama 3.1: An in-depth analysis of thenext-generation large language model.
**[43]** Yue Wang, Weishi Wang, Shafiq Joty, and Steven CH Hoi. 2021. Codet5: Identifier-aware unified pre-trained encoder-decoder models for code understanding and generation. arXiv preprint arXiv:2109.00859 (2021).
**[44]** Jason Wei, Xuezhi Wang, Dale Schuurmans, Maarten Bosma, Fei Xia, Ed Chi, Quoc V Le, Denny Zhou, et al. 2022. Chain-of-thought prompting elicits reasoning in large language models. Advances in neural information processing systems 35 (2022), 24824-24837.
**[45]** Peizhi Wu and Gao Cong. 2021. A unified deep model of learning from both data and queries for cardinality estimation. In Proceedings of the 2021 International Conference on Management of Data. 2009-2022.
**[46]** An Yang, Baosong Yang, Beichen Zhang, Binyuan Hui, Bo Zheng, Bowen Yu, Chengyuan Li, Dayiheng Liu, Fei Huang, Haoran Wei, et al. 2024. Qwen2. 5 Technical Report. arXiv preprint arXiv:2412.15115 (2024).
**[47]** Zongheng Yang, Eric Liang, Amog Kamsetty, Chenggang Wu, Yan Duan, Xi Chen, Pieter Abbeel, Joseph M Hellerstein, Sanjay Krishnan, and Ion Stoica. 2019. Deep unsupervised cardinality estimation. arXiv preprint arXiv:1905.04278 (2019).
**[48]** Xiang Yu, Guoliang Li, Chengliang Chai, and Nan Tang. 2020. Reinforcement learning with tree-Istm for join order selection. In 2020 IEEE 36th International Conference on Data Engineering (ICDE). IEEE, 1297-1308.
**[49]** Xuanhe Zhou, Guoliang Li, Chengliang Chai, and Jianhua Feng. 2021. A learned query rewrite system using monte carlo tree search. Proceedings of the VLDB Endowment 15, 1 (2021), 46-58.

## Claims

1. An LLM-based method for optimizing Security Information and Event Management (SIEM)'s rule sets, comprising:
a) using LLMs to analyze contextual components of SIEM rules in said rule sets;
b) generating SIEM rule embeddings and using a similarity matching analysis, to identify the most similar rules in said rule sets;
c) analyzing said most similar rules, by said LLMs, to determine rule similarity by performing semantic and syntactic comparisons of SIEM rules in said rule sets;
d) using said comparisons for identifying and eliminating of redundant rules;
and
e) providing optimized recommendations for refining said rule set, based on the elimination of redundant rules.

2. A method according to claim 1, wherein semantic and syntactic comparisons of SIEM rules are performed using embeddings being generated by code-based transformer models.

3. A method according to claim 1, further comprising performing retrospective and prospective analysis of SIEM rules for potential redundancies, using a Human-In-The-Loop (HITL) system.

4. A method according to claim 1, wherein potentially redundant or overlapping rules are identified by comparing the embeddings of said potentially redundant or overlapping rules, using a distance-based similarity detection algorithm.

5. A method according to claim 1, wherein each rule pair, consisting of the target rule and a potentially similar rule that is identified through similarity matching, is analyzed using a structured Chain-of-Thought (CoT) reasoning process performed by an LLM according to the following steps:
a) evaluating functional and semantic overlap between rules;
b) assessing platform specificity and hierarchical relationships between target environments;
c) comparing the rules, based on operational metrics including coverage, false positive rate, and computational efficiency.

6. A method according to claim 1, wherein SIEM rule formats include Sigma, Splunk and AQL rule definitions.

7. A method according to claim 1, wherein LLM-aided analysis is performed by:
a) transforming SIEM rules are into vectorized embedding representations in a high-dimensional vector to facilitate syntactical analysis;
b) comparing said vectorized embedding representations of target rule and existing rule set using a similarity matching algorithm;
c) upon comparing a target rule to an existing rule set, generating a cluster of potentially similar rules;
d) evaluating both the target rule and the cluster of similar rules.

8. A method according to claim 1, wherein consistent vector representations is obtained by employing adaptive segmentation coupled with a conditional processing pipeline, to process SIEM rules of varying complexity, for preserving logical boundaries within each segment.

9. A method according to claim 1, wherein the integrity of rule vectors is maintained under extreme load conditions using an overflow management mechanism.

10. A method according to claim 1, wherein similarity detection is performed using cosine similarity, to quantify syntactic relationships between SIEM rule embeddings.

11. A method according to claim 1, wherein redundancy analysis and recommendation generation are performed by an LLM, is being enhanced with Chain-of-Thought (CoT) reasoning.

12. An LLM-based platform for optimizing Security Information and Event Management (SIEM)'s rule sets, comprising a computerized device with at least one processor and associated memory, which is configured to:
a) analyze contextual components of SIEM rules in said rule sets, using LLMs;
b) generate SIEM rule embeddings and use a similarity matching analysis, to identify the most similar rules in said rule sets;
c) analyze said most similar rules, by said LLMs, to determine rule similarity by performing semantic and syntactic comparisons of SIEM rules in said rule sets;
d) identify and eliminate redundant rules; and
e) provide optimized recommendations for refining said rule set, based on the elimination of redundant rules.
